# EUROPEAN PATENT SPECIFICATION

(11) **EP 1 006 170 B1**
(45) Date of publication and mention of the grant of the patent: **01.10.2003**
(21) Application number: 99123841.1
(22) Date of filing: 01.12.1999
(51) Int. Cl.: C09K 11/58, C09K 11/61

(54) **Electroluminescent phosphor having purple emmision**
Elektrolumineszenter Phosphor mit Purpurstrahlung
Phosphore électroluminescent émettant dans le pourpre

(30) Priority: 01.12.1998 US 203153
(43) Date of publication of application: 07.06.2000
(73) Proprietor: OSRAM SYLVANIA INC., Danvers, MA 01923 (US)
(72) Inventor: Brese, Nathaniel E., Lansdale, Pennsylvania 19446 (US)
(74) Representative: Grünecker, Kinkeldey, Stockmair & Schwanhäusser Anwaltssozietät

(56) References cited:
- GB-A- 1 088 318

## Description

This invention relates to phosphors and more particularly to electroluminescent phosphors. Still more particularly, it relates to an electroluminescent phosphor having its emission spectrum in the purple.

Electroluminescent (EL) phosphors generally emit in the green region of the spectrum and have many uses. Phosphors having a purple emission would be useful in helping to provide a gamut of colors. The color coordinates used herein are those employed with the standard ICI (International Commission on Illumination) diagram and referred to herein as the CIE (Commission Internationale d'Eclairage) diagram or CIE coordinates.

It is, therefore, an object of the invention to provide a bluer emitting EL phosphor.

It is another object of the invention to provide an EL phosphor that has its CIEy coordinate shifted into the blue.

Yet another object of the invention is the provision of a method of making such phosphors.

These objects are accomplished, in one aspect of the invention, by an electroluminescent phosphor having an emission spectrum in the purple as defined by having CIE coordinates of x ≈ 0.150 and y ≈ 0.080 and being free of chlorine.

For a better understanding of the present invention, together with other and further objects, advantages and capabilities thereof, reference is made to the following disclosure and appended claims.

The preparation of electroluminescent zinc sulfide occurs generally in two steps. In the first step, bulk zinc sulfide (ZnS) is doped with activators and co-activators such as, for example, one or more of copper, manganese, aluminum, chlorine and bromine and then fired at a high temperature, generally greater than 1100°C together with suitable fluxes, as is known in the art. At least one of the fluxes contains chlorine. The fired material is then washed free of any flux, worked to induce faults in the material and then fired a second time. During this second firing, conducting copper sulfide is deposited into the faults in the ZnS, rendering it electroluminescent. The emission color of the finished phosphor depends and the type and amount of activators introduced in the first firing, the firing conditions, and working procedure between firings. It has been found that excluding chlorine produces a phosphor with a purple emission color.

### EXAMPLE

1 pound of chlorine-free ZnS, having an average particle size between 5 and 10 microns, is blended with 94.98 g of KI, 36.32 g of S, and 1.575 g of CuI. This mixture is fired in covered quatz crucibles for 3 to 7 hours at 1100°C to 1250°C. After firing the material is washed with water to remove and traces of flux and then mulled to induce faults in the particles. To each 75 g of this first-fired and work-stressed ZnS:Cu,I is added 1.88 g CuSO₄, and 19.15 g ZnSO₄·7H₂O to form a mixture. This mixture was blended in a 500 ml plastic bottle for 20 minutes. A suitable blending apparatus is a paint shaker. The shaken mixture was charged into a 100 ml alumina crucible, which was covered with a domed alumina lid. The crucible was sealed, preferably with electrical tape, and fired in an electric furnace at 730°C for between 2 and 2½ hours. Preferably, the firing time is 2 hours and 15 minutes. After cooling, the phosphor was washed several times with water, twice with acetic acid, several additional times with water, once with KCN, and again with water. The phosphor was then collected by filtration, dried for several hours in a drying oven and then sifted through a 325 stainless steel screen.

Test lamps were prepared with this phosphor. They were operated an 100v, 400Hz in a room held at 50% relative humidity at a temperature of 70°F. The results are shown in Table I.

| Lot No. | CIE x, y | Efficacy | Median Size |
|---|---|---|---|
| NB433-60-4b | 0.151, 0.084 | 0.72 lm/W | 20.9 µm |
| NB474-58-1 | 0.149, 0.079 | " | 24.9 µm |
| NB474-58-2 | 0.149, 0.77 | " | 21.6 µm |

These materials have a striking purple emission which appears much brighter than the measured brightness reveals. This enhanced contrast is usefull in EL device applications.

While there have been shown and described what are at present considered the preferred embodiments of the invention, it will be apparent to those skilled in the art that various changes and modifications can be made herein without departing from the scope of the invention as defined by the appended claims.

## Claims

1. An electroluminescent phosphor having an emission spectrum in the purple as defined by having CIE coordinates of x = 0.150 and y = 0.080 and being free of chlorine.

2. The electroluminescent phosphor of claim 1 wherein said x CIE coordinate is between 0.149 and 0.151 and said y CIE coordinate is between 0.077 and 0.084.

3. The electroluminescent phosphor of claim 1 wherein said phosphor is composed of particles having a median particle size between about 20.9 and 24.9 µm.

## Patentansprüche

1. Elektrolumineszenter Phosphor, der ein Emissionsspektrum im Purpumen besitzt **dadurch definiert,** dass er CIE- Koordinaten von x = 0,150 und y = 0,080 besitzt und der chlorfrei ist.

2. Elektrolumineszenter Phosphor nach Anspruch 1, wobei die x-Cie-Koordinate zwischen 0,149 und 0,151 liegt und die y-CIE- Koordinate zwischen 0,077 und 0,084 liegt.

3. Elektrolumineszenter Phosphor nach Anspruch 1, wobei der Phosphor aus Partikeln besteht, die eine mittlere Partikelgröße zwischen etwa 20,9 und 24,9 µm besitzen.

## Revendications

1. Luminophore électroluminescent présentant un spectre d'émission dans le pourpre défini par les coordonnées CIE de x = 0,150 et y = 0,080, et étant dépourvu de chlore.

2. Luminophore électroluminescent selon la revendication 1, dans lequel la dite coordonnée x CIE est comprise entre 0,149 et 0,151 et la dite coordonnée y CIE est comprise entre 0,077 et 0,084.

3. Luminophore électroluminescent selon la revendication 1, dans lequel le dit luminophore est composé de particules dont la taille moyenne est comprise entre 20,9 et 24,9 µm.
